# EUROPEAN PATENT APPLICATION

(11) **EP 4 340 431 A1**
(43) Date of publication of application: **20.03.2024**
(21) Application number: 21945741.3
(22) Date of filing: 21.10.2021
(51) Int. Cl.: H04W 24/02

(54) **METHOD AND APPARATUS FOR UNINTERRUPTED UPGRADING OF NETWORK SLICING SERVICE, AND STORAGE MEDIUM**

(30) Priority: 18.06.2021 CN 202110681421
(71) Applicant: ZTE Corporation, Shenzhen, Guangdong 518057 (CN)
(72) Inventor: XI, Chenxuan, Shenzhen, Guangdong 518057 (CN)
(74) Representative: Novagraaf Technologies
(86) International application number: PCT/CN2021/125316
(87) International publication number: WO 2022/262161

(57) **Abstract**

A method and apparatus for in-service upgrading of network slices, and a storage medium are provided. The method includes: receiving, by the second device, version information and configuration information of respective network slices synchronized by a first device; when the synchronization of the version information and the configuration information is completed, performing master/standby switching between respective first slice control planes of the first device and respective second slice control planes of the second device, and performing master/standby switching between respective first slice forwarding planes of the first device and respective second slice forwarding planes of the second device; and when the master/standby switching of the slice control planes and the slice forwarding planes is completed, loading configuration data and performing configuration according to the configuration data by the second device, so as to complete upgrading of the second device.

## Description

The present disclosure claims priority to Chinese Patent Application No. 202110681421.5, filed with the China National Intellectual Property Administration on June 18, 2021 and entitled "METHOD AND APPARATUS FOR IN-SERVICE UPGRADING OF NETWORK SLICES, AND STORAGE MEDIUM", which is incorporated herein by reference in its entirety.

### Technical Field

The present disclosure mainly relates to the field of communications, and in particular, to a method and apparatus for in-service upgrading of network slices, and a storage medium.

### Background

With the development of 5th Generation (5G) network slicing across industries, application scenarios such as Virtual Reality (VR)/Augmented Reality (AR), automotive, aviation, medical, power grid, logistics, and unmanned aerial vehicle emerge accordingly. In order to be applied across the various application scenarios, the network slicing needs to have stronger service adaptability, and it is required that specific versions meeting the requirements of the respective scenarios can operate on different network slices, and differential upgrade can be performed on the different network slices, so that high-efficiency and reliable multiplexing of the hardware facility can be achieved.

In the related art, a device with multiple network slices performs unified management on the respective slices on a control plane, and configures different hardware resources for the respective slices on a forwarding plane, so as to implement traffic forwarding of different slices. Therefore, the respective slices of the same device can only run under the same version, which cannot meet the requirements of a multi-slice application, and cannot provide differential and hierarchical network slices. Meanwhile, due to the current structure of the device with multiple network slices, the device can only support entire device upgrade, that is, all slices can only be upgraded to the same version in an upgrade process, and all slices have to be rolled back to the previous version when the upgrade fails. Therefore, it is impossible to meet the requirements for differential version upgrade of multiple applications.

Aiming at the problems in the related art that a device with multiple network slices can only upgrade the multiple network slices to the same version during upgrading, no effective technical solution has been proposed.

### Summary

The embodiments of the present disclosure provide a method and apparatus for in-service upgrading of network slices, and a storage medium, which may at least solve the problems in the related art that a device with multiple network slices can only upgrade the multiple network slices to the same version during upgrading.

The embodiments of the present disclosure provide a method for in-service upgrading of network slices, including: receiving, by a second device, version information and configuration information of respective network slices synchronized by a first device; when the synchronization of the version information and the configuration information is completed, performing master/standby switching between respective first slice control planes of the first device and respective second slice control planes of the second device, and performing master/standby switching between respective first slice forwarding planes of the first device and respective second slice forwarding planes of the second device; and when the master/standby switching between the first slice control planes and the second slice control planes and between the first slice forwarding planes and the second slice forwarding planes is completed, loading configuration data and performing configuration according to the configuration data by the second device, so as to complete upgrading of the second device.

In some exemplary embodiments, receiving, by the second device, the version information of the respective network slices synchronized by the first device includes: receiving, by the second device, an in-service upgrading start command sent by the first device; and performing, by the second device, resetting according to the in-service upgrading start command, and receiving, by the second device, latest version information of the respective network slices synchronized by a version management module of the first device.

In some exemplary embodiments, receiving, by the second device, the configuration information of the respective network slices synchronized by the first device includes: receiving, by the second device, configuration information for keeping a service uninterrupted of the respective network slices that is synchronized by a data storage module of the first device, wherein the configuration information for keeping the service uninterrupted is used for maintaining traffic forwarding and a service state of the second device.

In some exemplary embodiments, receiving, by the second device, the configuration information for keeping the service uninterrupted of the respective network slices that is synchronized by the data storage module of the first device includes: determining first network slices of the first device and second network slices of the second device; and receiving, through the respective second network slices, first configuration information for keeping the service uninterrupted that is synchronized by the respective first network slices.

In some exemplary embodiments, after receiving, by the second device, the version information and the configuration information of the respective network slices synchronized by the first device, the method further includes: in a process that the respective network slices of the second device are upgraded according to the version information and the configuration information, when it is detected that a part of network slices in the respective network slices fail to be upgraded, instructing the second slice control planes and the second slice forwarding planes corresponding to the part of network slices to perform a rollback operation, and instructing other network slices to continue to be upgraded.

In some exemplary embodiments, after receiving, by the second device, the version information and the configuration information of the respective network slices synchronized by the first device, the method further includes: receiving, by the second device, first hot backup data and second hot backup data that are sent by the first device; and performing, by the second device, the master/standby switching between the first slice control planes and the second slice control planes according to the first hot backup data, and the master/standby switching between the first slice forwarding planes and the second slice forwarding planes according to the second hot backup data.

In some exemplary embodiments, the method further includes: when the master/standby switching between the first slice control planes and the second slice control planes is completed, sending full data to the second slice control plane, wherein the full data includes configuration information and configuration data; and when the master/standby switching between the first slice forwarding planes and the second slice forwarding planes is not completed, sending changed data in the configuration information to the second slice forwarding plane.

In some exemplary embodiments, the method further includes: when the master/standby switching between the first slice forwarding planes and the second slice forwarding planes is completed, sending full data to the second slice forwarding plane, wherein the full data includes configuration information and configuration data; and when the master/standby switching between the first slice control planes and the second slice control planes is not completed, sending changed data in the configuration information to the second slice control plane.

According to another embodiment of the present disclosure, also provided is an apparatus for in-service upgrading of network slices. The apparatus includes: a receiving module, configured to receive version information and configuration information of respective network slices synchronized by a first device; a switching module, configured to perform, when the synchronization of the version information and the configuration information is completed, master/standby switching between respective first slice control planes of the first device and respective second slice control planes of the second device, and master/standby switching between respective first slice forwarding planes of the first device and respective second slice forwarding planes of the second device; and an upgrading module, configured to, when the master/standby switching between the first slice control planes and the second slice control planes and between the first slice forwarding planes and the second slice forwarding planes is completed, load configuration data and perform configuration according to the configuration data by the second device, so as to complete upgrading of the second device.

According to another embodiment of the present disclosure, a computer-readable storage medium is further provided. The computer-readable storage medium stores a computer program, and the computer program, when running on a processor, causes the processor to execute the operations in any one of the method embodiments.

According to another embodiment of the present disclosure, also provided is an electronic device, including a memory and a processor, wherein the memory stores a computer program, and the processor is configured to run the computer program so as to execute the operations in any one of the method embodiments.

By means of the technical solution, the second device receives version information and configuration information of respective network slices synchronized by the first device; when the synchronization of the version information and the configuration information is completed, master/standby switching between respective first slice control planes of the first device and respective second slice control planes of the second device is performed, and master/standby switching between respective first slice forwarding planes of the first device and respective second slice forwarding planes of the second device is performed; and when the master/standby switching between the first slice control planes and the second slice control planes and between the first slice forwarding planes and the second slice forwarding planes is completed, the second device loads configuration data and performs configuration according to the configuration data, so as to complete upgrading of the second device. That is, a control plane and a forwarding plane are set for each network slice, and by master/standby switching between the first slice control planes of the first device and the second slice control planes of the second device and master/standby switching between the first slice forwarding planes of the first device and the second slice forwarding planes of the second device, respective network slices of the second device perform independent version upgrade according to their respective version information and configuration information. By means of the above technical solution, the problems in the related art that a device with multiple network slices can only upgrade the multiple network slices to the same version during upgrading may be solved, thereby ensuring that upgrading processes of multiple network slices do not affect each other, and a variation of updated versions of the multiple network slices are supported.

### Brief Description of the Drawings

Drawings, provided for further understanding of the present disclosure and forming a part of the description, are used to explain the present disclosure together with exemplary embodiments of the present disclosure rather than to limit the present disclosure. In the drawings:
Fig. 1 is a block diagram of the hardware structure of a computer terminal for implementing a method for in-service upgrading of network slices according to an embodiment of the present disclosure;
Fig. 2 is a flowchart (I) of a method for in-service upgrading of network slices according to an embodiment of the disclosure;
Fig. 3 is a structure diagram of a device for implementing a method for in-service upgrading of network slices in the related art;
Fig. 4 is a structure diagram of a device for implementing a method for in-service upgrading of network slices according to an exemplary embodiment of the present disclosure;
Fig. 5 is a schematic diagram of inter-device cross-version communication in a method for in-service upgrading of network slices according to an exemplary embodiment of the present disclosure;
Fig. 6 is a schematic diagram of a slice upgrade state of a method for in-service upgrading of network slices according to an exemplary embodiment of the present disclosure;
Fig. 7 is a schematic diagram of an initial device state of a method for in-service upgrading of network slices according to an exemplary embodiment of the present disclosure;
Fig. 8 is a schematic diagram of a device upgrade state of a method for in-service upgrading of network slices according to an exemplary embodiment of the present disclosure;
Fig. 9 is a schematic diagram of upgrading of control planes and forwarding planes of respective slices in a method for in-service upgrading of network slices according to an exemplary embodiment of the present disclosure;
Fig. 10 is a schematic diagram of slice upgrade completion of a method for in-service upgrading of network slices according to an exemplary embodiment of the present disclosure;
Fig. 11 is a schematic diagram of device upgrade completion of a method for in-service upgrading of network slices according to an exemplary embodiment of the present disclosure;
Fig. 12 is a structural block diagram of an apparatus for in-service upgrading of network slices according to an embodiment of the present disclosure; and
Fig. 13 is a flowchart (II) of a method for in-service upgrading of network slices according to an embodiment of the present disclosure.

### Detailed Description

Hereinafter, the present disclosure will be described in detail with reference to the accompanying drawings and embodiments. It is important to note that the embodiments of the present disclosure and the features in the embodiments can be combined under the condition of no conflicts.

It should be noted that, terms such as "first" and "second" in the description, claims, and accompanying drawings of the present disclosure are used to distinguish similar objects, but are not necessarily used to describe a specific sequence or order. It should be understood that the data so used may be interchanged where appropriate for the embodiments of the present disclosure described herein. In addition, the terms "include/include" and "have", and any variations thereof, are intended to cover a non-exclusive inclusion, for example, a process, method, system, product, or apparatus that includes a series of operations or units is not necessarily limited to those operations or units that are expressly listed, but may include other operations or units that are not expressly listed or inherent to such process, method, product, or apparatus.

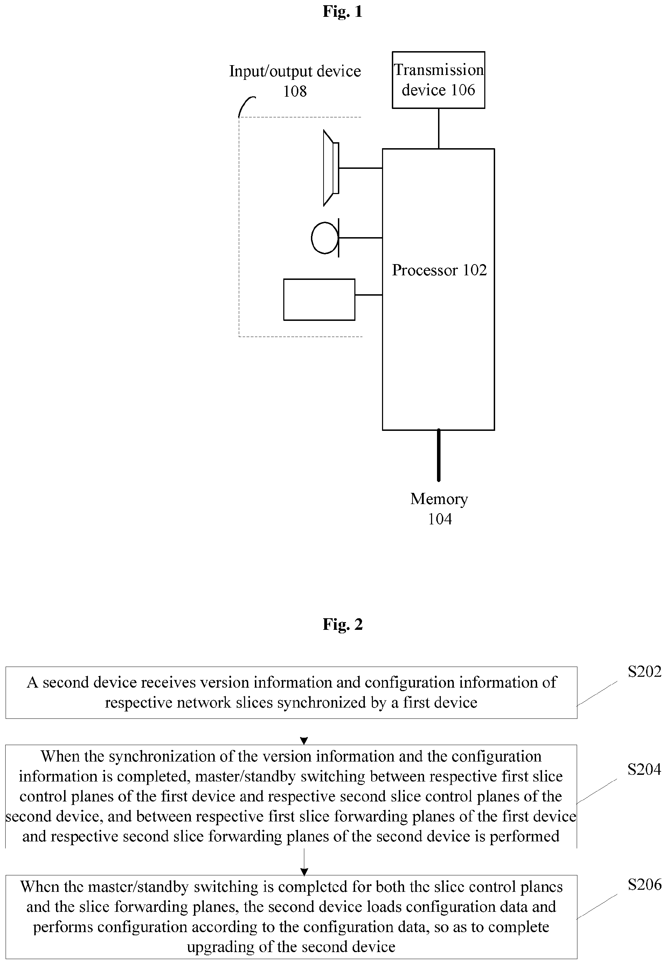

The method provided in the embodiments of the present disclosure may be executed in a mobile terminal, a computer terminal, or a similar computing apparatus. By taking running on a computer terminal as an example, Fig. 1 is a block diagram of the hardware structure of a computer terminal for implementing a method for in-service upgrading of network slices according to an embodiment of the present disclosure. As shown in Fig. 1, the computer terminal may include one or more (only one is shown in Fig. 1) processors 102 (the processors 102 may include but are not limited to processing apparatuses such as a microprocessor (e.g., Micro Controller Unit (MCU) or a programmable logic device (e.g., Field Programmable Gate Array (FPGA)) and a memory 104 configured to store data. In some exemplary embodiments, the computer terminal may further include a transmission device 106 configured to perform communication functions and an input/output device 108. A person skilled in the art may understand that the structure shown in Fig. 1 is merely exemplary, and does not limit the structure of the foregoing computer terminal. For example, the computer terminal may further include more or fewer components than shown in Fig. 1, or have a different configuration from the equivalent functions shown in Fig. 1 or more than the functions shown in Fig. 1. The memory 104 may be configured to store a computer program, for example, a software program and a module of application software, for example, a computer program corresponding to the method for in-service upgrading of the network slices according to the embodiments of the present disclosure, and the processor 102 runs the computer program stored in the memory 104, so as to execute various function applications and data processing, that is, to implement the foregoing method. The memory 104 may include high-speed random access memory, and may also include non-volatile memory, such as one or more magnetic storage devices, flash memory, or other non-volatile solid-state memory. In some examples, the memory 104 may further include a memory remotely located with respect to the processor 102, and such remote memory may be connected to the computer terminal over a network. Examples of such network include, but are not limited to, the Internet, an intranet, a local area network, a mobile communication network, and combinations thereof. The transmission device 106 is configured to receive or transmit data via a network. Specific examples of the described network may include a wireless network provided by a communication provider of the computer terminal. In an example, the transmission device 106 may include a Network Interface Controller (NIC) that may be coupled to other network devices via a base station to communicate with the Internet. In an example, the transmission device 106 may be a Radio Frequency (RF) module configured to communicate with the Internet wirelessly.

According to an embodiment of the present disclosure, a method for in-service upgrading of network slices is provided, which is performed by the computer terminal (for example, a second device). Fig. 2 is a flowchart (I) of a method for in-service upgrading of network slices according to an embodiment of the disclosure, and as shown in Fig. 2, the method includes the following operations S202 to S206.

At S202, the second device receives version information and configuration information of respective network slices synchronized by a first device.

At S204, when the synchronization of the version information and the configuration information is completed, master/standby switching between respective first slice control planes of the first device and respective second slice control planes of the second device is performed, and master/standby switching between respective first slice forwarding planes of the first device and respective second slice forwarding planes of the second device is performed.

At S206, when the master/standby switching between the first slice control planes and the second slice control planes and between the first slice forwarding planes and the second slice forwarding planes is completed, the second device loads configuration data and performs configuration according to the configuration data, so as to complete upgrading of the second device.

Through the foregoing operations, the second device receives version information and configuration information of respective network slices synchronized by the first device; when the synchronization of the version information and the configuration information is completed, master/standby switching between respective first slice control planes of the first device and respective second slice control planes of the second device is performed, and master/standby switching between respective first slice forwarding planes of the first device and respective second slice forwarding planes of the second device is performed; and when the master/standby switching between the first slice control planes and the second slice control planes and between the first slice forwarding planes and the second slice forwarding planes is completed, the second device loads configuration data and performs configuration according to the configuration data, so as to complete upgrading of the second device. That is, a control plane and a forwarding plane are set for each network slice, and by master/standby switching between the first slice control planes of the first device and the second slice control planes of the second device and master/standby switching between the first slice forwarding planes of the first device and the second slice forwarding planes of the second device, respective network slices of the second device perform independent version upgrade according to their respective version information and configuration information required for keeping the service uninterrupted. By means of the above technical solution, the problems in the related art that a device with multiple network slices can only upgrade the multiple network slices to the same version during upgrading may be solved, thereby ensuring that upgrading processes of multiple network slices do not affect each other, and a variation of updated versions of the multiple network slices are supported.

It should be noted that the "configuration data" in operation S204 may be understood as other data except the configuration information in full data, the first device may be understood as a master device, and the second device may be understood as a standby device.

In operation S202, the version information of the respective network slices received by the second device may be different version information, and the configuration information of the respective network slices is different configuration information required for keeping the service uninterrupted corresponding to different versions. When version information of the respective network slices received by the second device is different version information, the versions to be upgraded of the respective network slices are different. The version information of the respective network slices received by the second device may also be the same version information, and in this case, the configuration information required for keeping the service uninterrupted is the configuration information required for keeping the service uninterrupted corresponding to one version, and the versions to be upgraded of the respective network slices are the same version. The configuration information required for keeping the service uninterrupted is data for maintaining traffic forwarding and a service state of the second device, so that it is ensured that the first device and the second device behave in the same manner from the perspective of upstream devices and downstream devices in the network. The information required for keeping the service uninterrupted is information received from the original first device before the master/standby switching and after the original second device is started with a new version. After the master/standby switching is completed, the new first device has "full data including configuration information required for keeping the service uninterrupted". The usage scenario of the information required for keeping the service uninterrupted mainly includes: 1. before the master/standby switching, the data received by the second device from the first device includes information required for keeping the service uninterrupted; 2. after the forwarding plane or the control plane is switched, when changed data is transferred between different planes, the forwarding plane and the control plane may be located at different devices, for example, the forwarding plane is switched while the control plane is not switched, or the forwarding plane is not switched while the control plane is switched.

In some exemplary embodiments, the process that the second device receives the version information of the respective network slices synchronized by the first device includes the following operations: the second device receives an in-service upgrading start command sent by the first device; and the second device performs resetting according to the in-service upgrading start command, and receives latest version information of the respective network slices synchronized by a version management module of the first device.

That is, the second device performs resetting according to the received in-service upgrading start command, and receives version information, so that the first device is upgraded to a version corresponding to the latest version information.

In some exemplary embodiments, the second device receives the configuration information for keeping the service uninterrupted of the respective network slices that is synchronized by a data storage module of the first device, wherein the configuration information for keeping the service uninterrupted is used for keeping traffic forwarding and a service state of the second device.

The new version information is loaded on respective slices of the second device, and the first device sends the configuration information for maintaining traffic forwarding and a service state to the second device, so as to ensure that the first device and the second device behave in the same manner from the perspective of upstream devices and downstream devices in the network, and other devices in the network are not aware of the switching between the first device and the second device in an upgrading process and the upgrading process.

In some exemplary embodiments, the process that the second device receives the configuration information for keeping the service uninterrupted of the respective network slices that is synchronized by the data storage module of the first device includes the following operations: first network slices of the first device and second network slices of the second device are determined; and first configuration information for keeping the service uninterrupted that is synchronized by the respective first network slices is received through the respective second network slices.

A system master control of the first device sends the configuration information for keeping the service uninterrupted to a slice management module of each network slice of the second device; each first network slice of the first device encodes and decodes the configuration information by means of a data processing module, and hot backs up the configuration information for keeping the service uninterrupted to a corresponding second network slice of the second device.

In some exemplary embodiments, after the second device receives the version information and the configuration information of the respective network slices synchronized by the first device, in a process that the respective network slices of the second device are upgraded according to the version information and the configuration information, when it is detected that a part of network slices in the respective network slices fail to be upgraded, the second slice control planes and the second slice forwarding planes corresponding to the part of network slices are instructed to perform a rollback operation, and other network slices are instructed to continue to be upgraded.

That is to say, multiple network slices of the second device are upgraded according to the version information and the configuration information synchronized by the first device. In the upgrade process, if an upgrade failure occurs in a part of the multiple network slices, the part of network slices are not upgraded any more, but are rolled back to restore to a version before the upgrade, and other network slices are not affected, and the upgrade for the other network slices is continued. That is to say, the upgrade failure of a part of network slices does not affect other forwarding planes and control planes of the part of network slices, and the in-service upgrading process of the other network slices.

Further, the slice management module records the second slice control plane and the second slice forwarding plane which fail to be upgraded, and notifies a flow control module to set an upgrade state of each network slice which fails to be upgraded to the rollback state. The slice management module resets, according to the version before the upgrade, the second slice control plane and the second slice forwarding plane which fail to be upgraded on the second device, and completes in-service upgrading of other forwarding planes and control planes and other network slices.

In an exemplary embodiment, after the second device receives the version information and the configuration information of the respective network slices synchronized by the first device, the second device receives first hot backup data and second hot backup data that are sent by the first device; and the second device performs the master/standby switching between the first slice control planes and the second slice control planes according to the first hot backup data, and the master/standby switching between the first slice forwarding planes and the second slice forwarding planes according to the second hot backup data.

That is to say, after the second device receives the version information of the respective network slices of the first device and configuration information required for keeping the service uninterrupted of the respective network slices of the first device, which are synchronized by the first device, the respective network slices of the second device load the corresponding version information and the configuration information required for keeping the service uninterrupted; the first device sends first hot backup data and second hot backup data to the second device, wherein the first hot backup data and the second hot backup data are data required for maintaining the traffic forwarding and the service state, which is encoded and decoded by means of a data processing module of the first device and hot backed up to the second device by the first device; furthermore, after the second device completes hot backup of the first hot backup data, master/standby switching between the first slice control planes and the second slice control planes is performed; and after the second device completes hot backup of the second hot backup data, and after a data convergence and a communication link state are idle, master/standby switching between the first slice forwarding planes and the second slice forwarding planes is performed.

In some exemplary embodiments, when the master/standby switching between the first slice control planes and the second slice control planes is completed, full data is sent to the second slice control plane, wherein the full data includes configuration information and configuration data required for keeping the service uninterrupted; and when the master/standby switching between the first slice forwarding planes and the second slice forwarding planes is not completed, changed data in the configuration information is sent to the second slice forwarding plane.

In some exemplary implementations, after the master/standby switching of the control planes is completed, a service configuration of a corresponding network slice is sent to the second slice control plane, so that the second slice control plane sends changed data in the full data to the first slice forwarding plane; after parsing, the first slice forwarding plane hot backs up the changed data in the full data to the second slice forwarding plane; and when the master/standby switching between the first slice forwarding planes and the second slice forwarding planes is not completed, changed data in the configuration information required for keeping the service uninterrupted is directly sent to the second slice forwarding plane, and furthermore, the slice management module of the second device may also be notified that the master/standby switching between the first slice control planes and the second slice control planes has been completed.

In some exemplary embodiments, when the master/standby switching between the first slice forwarding planes and the second slice forwarding planes is completed, full data is sent to the second slice forwarding plane, wherein the full data includes configuration information required for keeping the service uninterrupted and configuration data; and when the master/standby switching between the first slice control planes and the second slice control planes is not completed, sending changed data in the configuration information to the second slice control plane.

In some exemplary implementations, after the master/standby switching between the first slice forwarding planes and the second slice forwarding planes is completed, the slice management module sends full data of the service configuration corresponding to the upgrade version corresponding to the second slice forwarding plane to the second slice forwarding plane, the second slice forwarding plane sends changed data in the full data to the first slice control plane, and the first slice control plane updates the data. When the master/standby switching between the first slice control plane and the second slice control plane is not completed, the changed data in the configuration information required for keeping the service uninterrupted is sent to the second slice control plane, and furthermore, the slice management module of the second device may also be notified that the master/standby switching between the first slice forwarding planes and the second slice forwarding planes has been completed.

The flow of the method for in-service upgrading of the network slices is described as follows with reference to several exemplary embodiments. It should be noted that the content described herein are not intended to limit the technical solutions of the embodiments of the present disclosure.

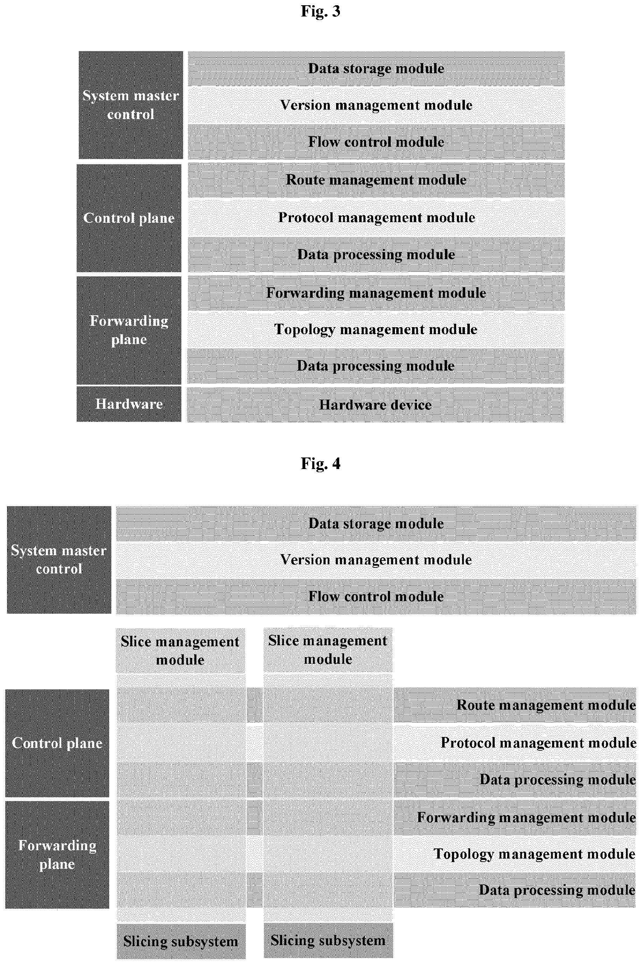

As shown in Fig. 3, Fig. 3 is a structure diagram of a device for implementing a method for in-service upgrading of network slices in the related art, and the structure of the device is as follows.

A master device and a standby device in the related art are each composed of a system master control, a control plane, a forwarding plane and hardware. The system master control includes a flow control module, a version management module and a data storage module. The control plane includes a route management module, a protocol management module and a data processing module. The forwarding plane includes a forwarding management module, a topology management module and a data processing module. The data processing module includes a sending module, a receiving module, an encoding module and a decoding module, and the data processing module is configured to complete data transmission between different versions and different processors.

As shown in Fig. 4, Fig. 4 is a structure diagram of a device for implementing a method for in-service upgrading of network slices according to an exemplary embodiment of the present disclosure. Fig. 4 is a more detailed structure diagram of a device for implementing a method for in-service upgrading of network slices, and the structure in Fig. 4 is described as follows.

In an exemplary embodiment of the present disclosure, a master device and a standby device are each composed of a system master control, a control plane, a forwarding plane and hardware. The system master control includes a flow control module, a version management module and a data storage module. The control plane includes a route management module, a protocol management module and a data processing module. The forwarding plane includes a forwarding management module, a topology management module and a data processing module. The data processing module including a sending module, a receiving module, an encoding module and a decoding module, and the data processing module is configured to complete data transmission between different versions and different processors. Slicing subsystems are function sets, and are configured to distinguish different slices sharing system resources. Each slicing subsystem includes a slice management module, a slice control plane and a slice forwarding plane.

Through the device structure of the master device and the standby device in the exemplary embodiment of the present disclosure, the solution for in-service upgrading of the network slices in the exemplary embodiment of the present disclosure may be implemented, and the upgrade operations (including operations 1 to 7) are described as follows.

At operation 1, the version management module of the standby device loads versions to which respective slices need to be upgraded.

At operation 2, the data storage module of the standby device loads the service configurations of the upgrade versions corresponding to the respective slices.

At operation 3, the standby device performs hardware reset according to the versions to be upgraded and the service configuration, and receives, after being started, data sent by the master device and required for keeping the service uninterrupted.

At operation 4, the flow control module of the standby device interacts with each slice management module to control each slicing subsystem to perform in-service upgrading.

At operation 5, the control plane and the forwarding plane of each slicing subsystem of the standby device perform in-service upgrading respectively, and notify the flow control module after completing the in-service upgrading.

At operation 6, after all the slicing subsystems complete the upgrade, the system master control switches to the new master device.

At operation 7, the original master device performs hardware resetting to become the new standby device.

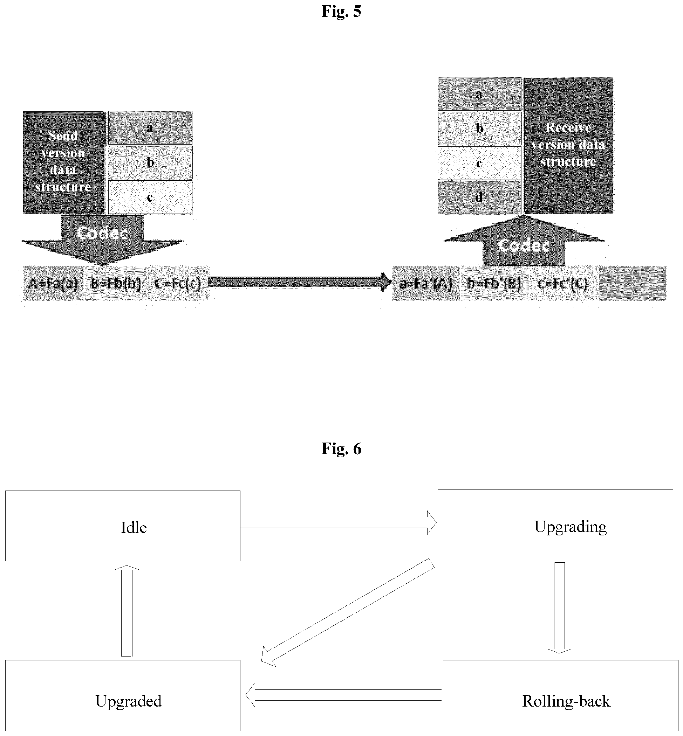

In the above upgrading process, since the upgrading process relates to two physical devices (a standby device and a master device) and multiple pieces of version information (information of multiple versions), the exchange of process messages, backup of configuration data, and transmission of protocol state, routing table entries and forwarding table entries need to support cross-version and cross-CPU, the sending end encodes the process messages, configuration data, protocol state, routing table entries and forwarding table entries into binary bitstreams in sequence according to a designated structure, and the receiving end decodes the binary bitstreams in sequence, as shown in Fig. 5. Fig. 5 is a schematic diagram of inter-device cross-version communication in a method for in-service upgrading of network slices according to an exemplary embodiment of the present disclosure. The upgrade state in the in-service upgrading process of multiple network slices includes: idle, upgrading, upgraded, and rolling-back. The upgrade state of each slice is controlled by the corresponding slice management module. In some exemplary implementations, the upgrade state "Idle" represents waiting for upgrade; the upgrade state "Upgrading" represents that the control plane and/or the forwarding plane are being upgraded; the upgrade state "Upgraded" represents that the upgrade of the control plane and the forwarding plane is completed; and the upgrade state "Rolling-back" represents rolling-back of a control plane or/and a forwarding plane. During the upgrading process, the control plane and/or the forwarding plane enter a Rolling-back state when the upgrading of the control plane and/or the forwarding plane fails. The control plane and/or the forwarding plane that fail to upgrade are restored by using the original version, and other parts continue to be upgraded by using the new version. As shown in Fig. 6, Fig. 6 is a schematic diagram of a slice upgrade state of a method for in-service upgrading of network slices according to an exemplary embodiment of the present disclosure.

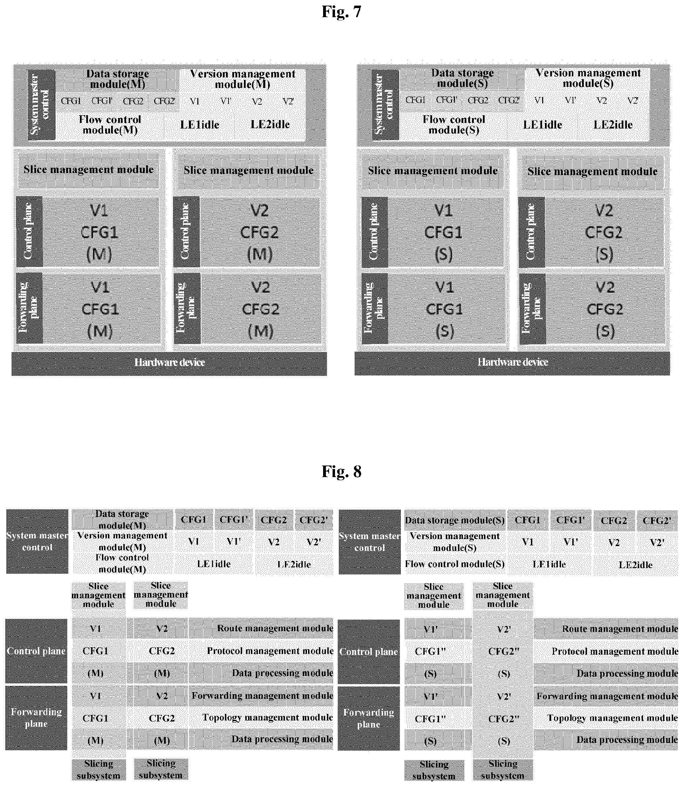

In an exemplary embodiment, the overall upgrade process of the standby device controlled by the system master control of the standby device is as follows. After receiving an upgrading command, the version management module of the master device loads a version to which each slice is to be upgraded, and the data storage module of the master device loads a service configuration of each slice. The master device sends an in-service upgrading start command to the standby device, and the system master control of the standby device controls to perform hardware resetting and starts with the new version. After the standby device completes startup, the master device synchronizes version information to the version management module of the standby device, and synchronizes configuration information required for keeping the service uninterrupted of each slice to the data storage module of the standby device. After the system master control of the standby device completes data synchronization, the system master control of the master device sends a new in-service upgrading start command of the slicing subsystem to the slice management module of each slice. Each slice of the standby device loads the new version, and each slice of the master device performs encoding and decoding by means of the data processing module, and hot backs up the data required for maintaining traffic forwarding and service state to a corresponding slice of the standby device. By virtue of the above operations, it may be ensured that the master device and the standby device behave in the same manner from the perspective of upstream devices and downstream devices in the network, and other devices in the network are not aware of the upgrading process and the switching between the master device and the standby device in the upgrading process. The flow control module updates the upgrade state of the slice that correspondingly performs data backup from the initial "idle" state to the "upgrading" state. As shown in Fig. 7, Fig. 7 is a schematic diagram of an initial device state of a method for in-service upgrading of network slices according to an exemplary embodiment of the present disclosure. As shown in Fig. 8, Fig. 8 is a schematic diagram of a device upgrade state of a method for in-service upgrading of network slices according to an exemplary embodiment of the present disclosure.

In some exemplary implementations, inside each slicing subsystem of the standby device, the control plane of the standby device receives hot backup data of the master device, then performs data convergence, and after the data convergence, the slice management module initiates switching between master and standby parts of the slice control plane. After the switching is completed, the slice management module obtains the upgraded service configuration corresponding to the slice from the data storage module, and sends the upgraded service configuration to the slice control plane. The route management module and the protocol management module of the control plane of the new master device send the changed data to the forwarding plane of the master device via the data processing module, and the forwarding plane updates the data of the forwarding management module and the topology management module. If the forwarding plane of the slice has not completed the master/standby switching, the changed data is coded and decoded by the data processing module, and then is hot backed up to a corresponding module of the forwarding plane of the standby device. After the control plane performs data convergence and the data is sent to the forwarding plane, the slice management module is notified that the master/standby switching of the control plane is completed, and at this time, the slice management module notifies the slicing subsystem that the original master control plane exits, and the subsequent process is continued after the switching of the forwarding plane of the slice is completed.

Further, while the control plane of the slicing subsystem performs in-service upgrading, the hot backup data of the master device received by the forwarding plane of the standby device triggers the slice management module to initiate switching of the master and standby parts of the slice forwarding plane after the data convergence and the link state recovery. After the switching is completed, the slice management module obtains the upgraded service configuration corresponding to the slice from the data storage module, and sends the full data to the slice forwarding plane. The forwarding management module and the topology management module of the forwarding plane of the new master device send the changed data to the master control plane via the data processing module, and the control plane updates the data of the route management module and the protocol management module. If the control plane of the slice does not complete the master/standby switching at this time, the changed data is encoded and decoded by the data processing module, and is hot backed up to a corresponding module of the control plane of the standby part. After the data of the forwarding plane is converged and the sending of the data to the control plane is completed, the slice management module is notified that the master/standby switching of the forwarding plane is completed, and at this time, the slice management module notifies the slicing subsystem that the original master forwarding plane exits, and the subsequent process is continued after the switching of the slice control plane is completed.

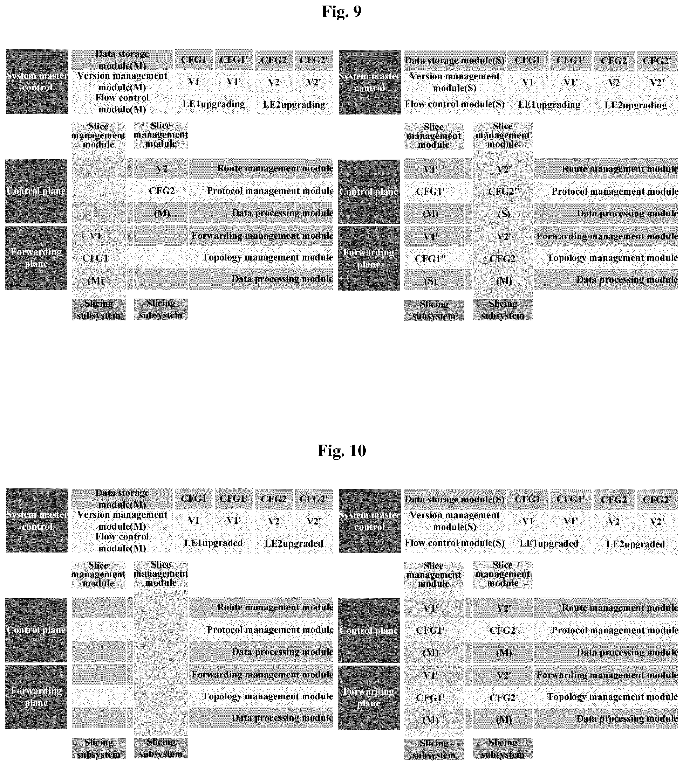

In addition, when an upgrade failure occurs in an upgrade process of the slice control plane or the slice forwarding plane, a rollback operation is performed on the corresponding plane of the corresponding slice, and the other planes continue the upgrade process. This process does not affect upgrading processes of other modules of the slice and other slices. In some exemplary implementations, the plane having upgrade failure is recorded by the slice management module, and the flow control module is notified to set the upgrade state of the current slice as "rolling-back". The slice management module resets the plane having upgrade failure in the standby device according to the version before the upgrade, and completes the subsequent upgrade. The plane includes a control plane and a forwarding plane. As shown in Fig. 9, Fig. 9 is a schematic diagram of upgrading of control planes and forwarding planes of respective slices in a method for in-service upgrading of network slices according to an exemplary embodiment of the present disclosure.

After receiving the notification that the master/standby switching of the control plane and the forwarding plane is completed and the upgrade is completed, the slice management module initiates data smoothing, full data of the route management module and the protocol management module of the control plane is sent to the forwarding plane, and the forwarding plane updates the forwarding management module and the topology management module. After the data of the slice control plane is converged, the slice management module notifies the flow control module that the current slice upgrade is completed, and the flow control module sets the upgrade state of the slice to "upgraded", and continues with the subsequent flows after all the slices are upgraded. As shown in Fig. 10, Fig. 10 is a schematic diagram of slice upgrade completion of a method for in-service upgrading of network slices according to an exemplary embodiment of the present disclosure.

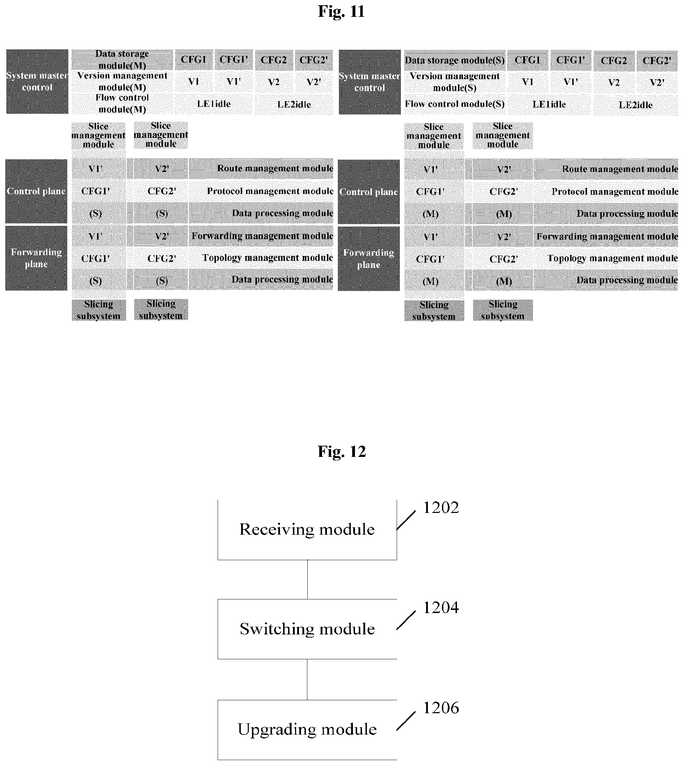

After receiving a notification that the upgrade of all the slicing subsystems is completed, the flow control module of the system master control of the original master device performs master/standby switching of the system master control. The system master control includes a flow control module, a version management module, a data storage module, etc., and is switched to the new master device. In this case, the versions of both the system master control of the new master device and the respective successfully upgraded slicing subsystems have been updated to the target version, and the upgrade states of the respective slices recorded by the flow control module are the idle state indicating the initialization of the new master device, waiting for the next upgrade process. The flow control module of the new master device resets the hardware of the original master device so that the original master device becomes a new standby device. After the standby device is started, the successfully upgraded control planes and forwarding planes of the slices load the corresponding upgraded versions, and the plane on which the upgrade fails loads the corresponding rolled back version. The system master control of the master device is synchronized to the standby device, and each module of the master device corresponding to each slicing subsystem is synchronized to the standby device. After the new standby device completes the data synchronization, the flow control module of the system master control ends the upgrading process. As shown in Fig. 11, Fig. 11 is a schematic diagram of device upgrade completion of a method for in-service upgrading of network slices according to an exemplary embodiment of the present disclosure.

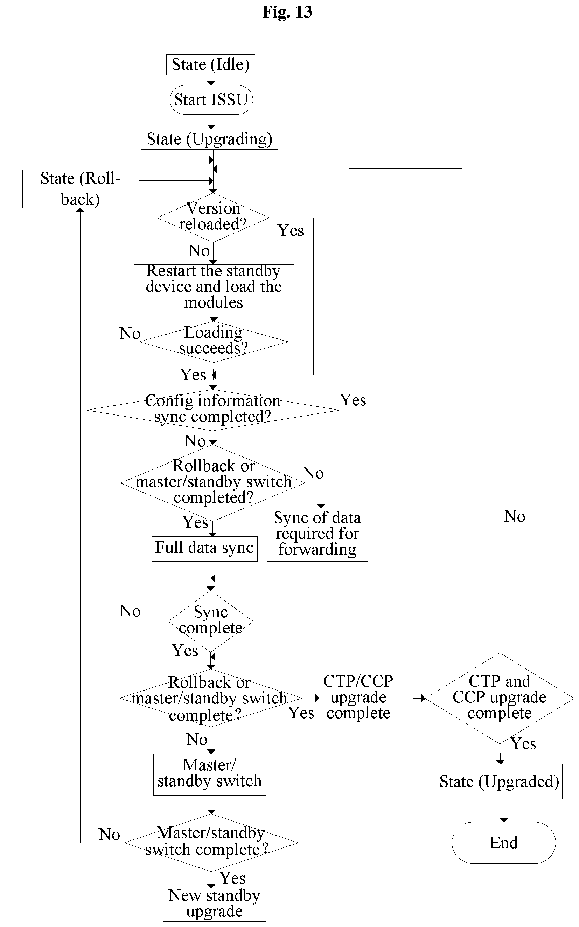

The embodiment further provides a method for in-service upgrading of network slices. Fig. 13 is a flowchart (II) of a method for in-service upgrading of network slices according to an embodiment of the present disclosure, which is performed by a standby device. As shown in Fig. 13, an exemplary operation flow is as follows:
At S1501: an initial state is Idle;
At S1502: In-Service Software Upgrading (ISSU) is started;
At S1503: the state is Upgrading;
At S1504: whether a version of the standby device is reloaded is judged, when the version of the standby device is not reloaded, operation S1505 is executed; and when the version of the standby device has been reloaded, operation S1507 is executed;
At S1505: the standby device is restarted and the new version is loaded;
At S1506: whether the new version is loaded successfully is judged, when the new version is loaded successfully, operation S1507 is executed, and otherwise, operation S1504 is executed;
At S1507: whether the configuration information required for keeping the service uninterrupted is synchronized successfully is judged, when the configuration information required for keeping the service uninterrupted is synchronized successfully, operation S1508 is executed, otherwise, operation S1508 is executed;
At S1508: whether the rolling-back or the master/standby switching is completed is judged, and when the rolling-back or the master/standby switching is completed, operation S1509 is executed, otherwise, operation S 1510 is executed;
At S1509: full data is synchronized, and operation S1511 is executed;
At S1510: data required for forwarding is synchronized;
At S1511: whether the data synchronization is successful is judged, and when the data synchronization is successful, operation S1512 is executed, otherwise, the state is restored to a Roll-back state, and operation S1504 is executed;
At S1512: whether the rolling-back or the master/standby switching is completed is judged, when the rolling-back or the master/standby switching is completed, operation S 1513 is executed, otherwise, operation S1517 is executed;
At S 1513: the forwarding plane container or the control plane container is upgraded;
At S1514: whether the upgrade of the forwarding plane container and the control plane container is completed is judged; when the upgrade is completed, operation S1515 is executed; otherwise, operation S1504 is executed;
At S1515: the state is changed to Upgraded;
At S1516: the upgrade process ends;
At S1517: the master device and standby device perform master/standby switching;
at S1518: whether the master/standby switching is successful is judged, and when the master/standby switching is successful, operation S 1519 is executed, otherwise, the state is changed to Rolling-back, and operation S1504 is executed;
At S1519: the new master device is upgraded, and operation S1504 is performed.

By means of the technical solution, the separation of the control plane and the forwarding plane of a system layer is refined as the separation of the control plane and the forwarding plane in a network slice. Modular encapsulation is performed on software functions, containers are used to bear functional modules of different planes in different slices, and system resources are scheduled via a CPU. The hardware resources are shared by respective slice forwarding planes, and a decision is made by the function modules of the respective slice forwarding planes. The route management module and the protocol management module of the control plane container of each slice maintain a routing table and a protocol state of the slice, and the forwarding management module of the forwarding plane container of each slice maintains a forwarding table of the slice. On the one hand, the usage efficiency of software and hardware resources is improved, and on the other hand, a device structure capable of supporting the running of different versions for multiple different slices is provided. Each network slice supports an independent version, and the upgrade of the respective network slices does not affect each other during the in-service upgrading process. Different slices do not perceive the internal configuration and behavior mutually. Different containers support running different versions, and communication between different versions is supported by using a unified encoding method. The upgrade processes of different containers are controlled and independently performed by the slice management module, and are separately rolled back when the upgrade fails.

Through the description of the foregoing embodiments, a person skilled in the art may clearly understand that the method according to the foregoing embodiments may be implemented by software in addition to a necessary universal hardware platform, and definitely may also be implemented by hardware. However, in many cases, the former is a preferred implementation. Based on such understanding, the essence of the technical solutions of the present disclosure or the part contributing to the related art may be embodied in the form of a software product. The computer software product is stored in a storage medium (such as a ROM/RAM, a magnetic disk, or an optical disk), and includes several instructions for instructing a terminal device (which may be a mobile phone, a computer, a server, or a network device) to execute the methods described in the embodiments of the present disclosure.

An apparatus for in-service upgrading of network slices is also provided in the present embodiment. The device is configured to implement the described embodiments and exemplary implementations, and what has been described will not be elaborated. The term "module", as used hereinafter, is a combination of software and/or hardware capable of realizing a predetermined function. Although the apparatus described in the following embodiment is preferably implemented by software, implementation of hardware or a combination of software and hardware is also possible and conceived.

Fig. 12 is a structural block diagram of an apparatus for in-service upgrading of network slices according to an embodiment of the present disclosure, which is performed by a second device. As shown in Fig. 12, the device includes:
a receiving module 1202, configured to receive version information and configuration information of respective network slices synchronized by a first device;
a switching module 1204, configured to perform, when the synchronization of the version information and the configuration information is completed, master/standby switching between respective first slice control planes of the first device and respective second slice control planes of the second device, and master/standby switching between respective first slice forwarding planes of the first device and respective second slice forwarding planes of the second device; and
an upgrading module 1206, configured to, when the master/standby switching between the first slice control planes and the second slice control planes and between the first slice forwarding planes and the second slice forwarding planes is completed, load configuration data and perform configuration according to the configuration data by the second device, so as to complete upgrading of the second device.

According to the present disclosure, the second device receives version information and configuration information of respective network slices synchronized by the first device; when the synchronization of the version information and the configuration information is completed, master/standby switching between respective first slice control planes of the first device and respective second slice control planes of the second device is performed, and master/standby switching between respective first slice forwarding planes of the first device and respective second slice forwarding planes of the second device is performed; and when the master/standby switching between the first slice control planes and the second slice control planes and between the first slice forwarding planes and the second slice forwarding planes is completed, the second device loads configuration data and performs configuration according to the configuration data, so as to complete upgrading of the second device. That is, a control plane and a forwarding plane are set for each network slice, and by master/standby switching between the first slice control planes of the first device and the second slice control planes of the second device and master/standby switching between the first slice forwarding planes of the first device and the second slice forwarding planes of the second device, respective network slices of the second device perform independent version upgrade according to their respective version information and configuration information required for keeping the service uninterrupted. By means of the above technical solution, the problems in the related art that a device with multiple network slices can only upgrade the multiple network slices to the same version during upgrading may be solved, thereby ensuring that upgrading processes of multiple network slices do not affect each other, and a variation of updated versions of the multiple network slices are supported.

It should be noted that the version information of the respective network slices received by the second device may be different version information, and the configuration information of the respective network slices is different configuration information required for keeping the service uninterrupted corresponding to different versions. When version information of the respective network slices received by the second device is different version information, the versions to be upgraded of the respective network slices are different. The version information of the respective network slices received by the second device may also be the same version information, and in this case, the configuration information required for keeping the service uninterrupted is the configuration information required for keeping the service uninterrupted corresponding to one version, and the versions to be upgraded of the respective network slices are the same version. The configuration information required for keeping the service uninterrupted is data for maintaining traffic forwarding and a service state of the second device, so that it is ensured that the first device and the second device behave in the same manner from the perspective of upstream devices and downstream devices in the network. The information required for keeping the service uninterrupted is information received from the original first device before the master/standby switching and after the original second device is started with a new version. After the master/standby switching is completed, the new first device has "full data including configuration information required for keeping the service uninterrupted". The usage scenario of the information required for keeping the service uninterrupted mainly includes: 1. before the master/standby switching, the data received by the second device from the first device includes information required for keeping the service uninterrupted; 2. after the forwarding plane or the control plane is switched, when changed data is transferred between different planes, the forwarding plane and the control plane may be located at different devices, for example, the forwarding plane is switched while the control plane is not switched, or the forwarding plane is not switched while the control plane is switched.

In some exemplary embodiments, the receiving module is further configured to control the second device to receive an in-service upgrading start command sent by the first device; and control the second device to perform resetting according to the in-service upgrading start command, and receive latest version information of the respective network slices synchronized by a version management module of the first device.

That is, the second device performs resetting according to the received in-service upgrading start command, and receives version information, so that the first device is upgraded to a version corresponding to the latest version information.

In some exemplary embodiments, the receiving module is further configured to control the second device to receive the configuration information for keeping the service uninterrupted of the respective network slices that is synchronized by a data storage module of the first device, wherein the configuration information for keeping the service uninterrupted is used for keeping traffic forwarding and a service state of the second device.

The new version information is loaded on respective slices of the second device, and the first device sends the configuration information for maintaining traffic forwarding and a service state to the second device, so as to ensure that the first device and the second device behave in the same manner from the perspective of upstream devices and downstream devices in the network, and other devices in the network are not aware of the switching between the first device and the second device in an upgrading process and the upgrading process.

In some exemplary embodiments, the receiving module is further configured to determine first network slices of the first device and second network slices of the second device; and receive, through the respective second network slices, first configuration information for keeping the service uninterrupted that is synchronized by the respective first network slices.

A system master control of the first device sends the configuration information for keeping the service uninterrupted to a slice management module of each network slice of the second device; each first network slice of the first device encodes and decodes the configuration information by means of a data processing module, and hot backs up the configuration information for keeping the service uninterrupted to a corresponding second network slice of the second device.

In some exemplary embodiments, the first upgrade module is further configured to, in a process that the respective network slices of the second device are upgraded according to the version information and the configuration information, when it is detected that a part of network slices in the respective network slices fail to be upgraded, instruct the second slice control planes and the second slice forwarding planes corresponding to the part of network slices to perform a rollback operation, and other network slices are instructed to continue to be upgraded.

That is to say, multiple network slices of the second device are upgraded according to the version information and the configuration information synchronized by the first device. In the upgrade process, if an upgrade failure occurs in a part of the multiple network slices, the part of network slices are not upgraded any more, but are rolled back to restore to a version before the upgrade, and other network slices are not affected, and the upgrade for the other network slices is continued. That is to say, the upgrade failure of a part of network slices does not affect other forwarding planes and control planes of the part of network slices, and the in-service upgrading process of the other network slices.

Further, the slice management module records the second slice control plane and the second slice forwarding plane which fail to be upgraded, and notifies a flow control module to set an upgrade state of each network slice which fails to be upgraded to the rollback state. The slice management module resets, according to the version before the upgrade, the second slice control plane and the second slice forwarding plane which fail to be upgraded on the second device, and completes in-service upgrading of other forwarding planes and control planes and other network slices.

In an exemplary embodiment, the receiving module is further configured to control the second device to receive first hot backup data and second hot backup data that are sent by the first device; and control the second device to perform the master/standby switching between the first slice control planes and the second slice control planes according to the first hot backup data, and the master/standby switching between the first slice forwarding planes and the second slice forwarding planes according to the second hot backup data.

That is to say, after the second device receives the version information of the respective network slices of the first device and configuration information required for keeping the service uninterrupted of the respective network slices of the first device, which are synchronized by the first device, the respective network slices of the second device load the corresponding version information and the configuration information required for keeping the service uninterrupted; the first device sends first hot backup data and second hot backup data to the second device, wherein the first hot backup data and the second hot backup data are data required for maintaining the traffic forwarding and the service state, which is encoded and decoded by means of a data processing module of the first device and hot backed up to the second device by the first device; furthermore, after the second device completes hot backup of the first hot backup data, master/standby switching between the first slice control planes and the second slice control planes is performed; and after the second device completes hot backup of the second hot backup data, and after a data convergence and a communication link state are idle, master/standby switching between the first slice forwarding planes and the second slice forwarding planes is performed.

In some exemplary embodiments, the apparatus further includes a sending module, which is configured to send full data to the second slice control plane, wherein the full data includes configuration information and configuration data required for keeping the service uninterrupted when the master/standby switching between the first slice control planes and the second slice control planes is completed; and send changed data in the configuration information required for keeping the service uninterrupted to the second slice forwarding plane when the master/standby switching between the first slice forwarding planes and the second slice forwarding planes is not completed.

In some exemplary implementations, after the master/standby switching of the control planes is completed, a service configuration of a corresponding network slice is sent to the second slice control plane, so that the second slice control plane sends changed data in the full data to the first slice forwarding plane; after parsing, the first slice forwarding plane hot backs up the changed data in the full data to the second slice forwarding plane; and when the master/standby switching between the first slice forwarding planes and the second slice forwarding planes is not completed, changed data in the configuration information required for keeping the service uninterrupted is directly sent to the second slice forwarding plane, and furthermore, the slice management module of the second device may also be notified that the master/standby switching between the first slice control planes and the second slice control planes has been completed.

In some exemplary embodiments, the sending module is configured to send full data to the second slice forwarding plane when the master/standby switching between the first slice forwarding planes and the second slice forwarding planes is completed, wherein the full data includes configuration information required for keeping the service uninterrupted and configuration data; and when the master/standby switching between the first slice control planes and the second slice control planes is not completed, send changed data in the configuration information required for keeping the service uninterrupted to the second slice control plane.

In some exemplary implementations, after the master/standby switching between the first slice forwarding planes and the second slice forwarding planes is completed, the slice management module sends full data of the service configuration corresponding to the upgrade version corresponding to the second slice forwarding plane to the second slice forwarding plane, the second slice forwarding plane sends changed data in the full data to the first slice control plane, and the first slice control plane updates the data. When the master/standby switching between the first slice control plane and the second slice control plane is not completed, the changed data in the configuration information required for keeping the service uninterrupted is sent to the second slice control plane, and furthermore, the slice management module of the second device may also be notified that the master/standby switching between the first slice forwarding planes and the second slice forwarding planes has been completed.

It should be noted that each module may be implemented by software or hardware. The latter may be implemented in the following manner, but is not limited thereto. All the modules are located in a same processor; alternatively, the modules are located in different processors in an arbitrary combination.

The embodiments of the present disclosure further provide a storage medium. The storage medium stores a computer program. The computer program is configured to execute the operations in any one of the method embodiments when running.

In some exemplary embodiments, the storage medium may be configured to store a computer program for executing the following operations S12 to S16.
At S12, the second device receives version information and configuration information of respective network slices synchronized by a first device;
At S14, when the synchronization of the version information and the configuration information is completed, master/standby switching between respective first slice control planes of the first device and respective second slice control planes of the second device is performed, and master/standby switching between respective first slice forwarding planes of the first device and respective second slice forwarding planes of the second device is performed;
At S16, when the master/standby switching between the first slice control planes and the second slice control planes and between the first slice forwarding planes and the second slice forwarding planes is completed, the second device loads configuration data and performs configuration according to the configuration data, so as to complete upgrading of the second device.

In some exemplary embodiments, the storage medium may include, but is not limited to, any medium that can store a computer program, such as a USB flash drive, a Read-Only Memory (ROM), a Random Access Memory (RAM), a removable hard disk, a magnetic disk, or an optical disc.

The embodiments of the present disclosure further provide an electronic apparatus, including a memory and a processor. The memory stores a computer program. The processor is configured to run the computer program to execute operations in any one of the method embodiments.

In some exemplary embodiments, the electronic apparatus can further include a transmission device and an input/output device, wherein the transmission device is connected to the processor, and the input/output device is connected to the processor.

In some exemplary embodiments, the processor may be configured to execute the following operations when running the computer program:
S12, the second device receives version information and configuration information of respective network slices synchronized by a first device;
S14, when the synchronization of the version information and the configuration information is completed, master/standby switching between respective first slice control planes of the first device and respective second slice control planes of the second device is performed, and master/standby switching between respective first slice forwarding planes of the first device and respective second slice forwarding planes of the second device is performed;
S16, when the master/standby switching between the first slice control planes and the second slice control planes and between the first slice forwarding planes and the second slice forwarding planes is completed, the second device loads configuration data and performs configuration according to the configuration data, so as to complete upgrading of the second device.

In some exemplary embodiments, the storage medium may include, but is not limited to, any medium that can store program codes, such as a USB flash disk, a Read-Only Memory (ROM), a Random Access Memory (RAM), a removable hard disk, a magnetic disk, or an optical disk.

For specific examples in this embodiment, reference may be made to the examples described in the foregoing embodiments and exemplary implementations, and details are not repeatedly described herein in this embodiment.

Obviously, those skilled in the art should understand that each module or each operation of the present disclosure may be implemented by a universal computing device, and the modules or operations may be concentrated on a single computing device or distributed on a network formed by a plurality of computing devices. In some exemplary implementations, the modules or operations may be implemented by program codes executable for the computing devices, so that the modules or operations may be stored in a storage device for execution with the computing devices, the shown or described operations may be executed in sequences different from those described here in some cases, or the modules or operations may be made into integrated circuit modules respectively, or multiple modules or operations therein may be made into a single integrated circuit module for implementing. As such, the present disclosure is not limited to any particular hardware and software combination.

The foregoing descriptions are merely exemplary embodiments of the present disclosure, but are not intended to limit the present disclosure. For those skilled in the art, the present disclosure may have various modifications and variations. Any modifications, equivalent replacements, improvements and the like made within the principle of the present disclosure shall fall into the scope of protection of the present disclosure.

## Claims

1. A method for in-service upgrading of network slices, which is performed by a second device, the method comprising:
receiving, by the second device, version information and configuration information of respective network slices synchronized by a first device;
when the synchronization of the version information and the configuration information is completed, performing master/standby switching between respective first slice control planes of the first device and respective second slice control planes of the second device, and performing master/standby switching between respective first slice forwarding planes of the first device and respective second slice forwarding planes of the second device; and
when the master/standby switching between the first slice control planes and the second slice control planes and between the first slice forwarding planes and the second slice forwarding planes is completed, loading configuration data and performing configuration according to the configuration data by the second device, so as to complete upgrading of the second device.

2. The method according to claim 1, wherein receiving, by the second device, the version information of the respective network slices synchronized by the first device comprises:
receiving, by the second device, an in-service upgrading start command sent by the first device; and
performing, by the second device, resetting according to the in-service upgrading start command, and receiving, by the second device, latest version information of the respective network slices synchronized by a version management module of the first device.

3. The method according to claim 1, wherein receiving, by the second device, the configuration information of the respective network slices synchronized by the first device comprises:
receiving, by the second device, configuration information for keeping a service uninterrupted of the respective network slices that is synchronized by a data storage module of the first device, wherein the configuration information for keeping the service uninterrupted is used for keeping traffic forwarding and a service state of the second device.

4. The method according to claim 3, wherein receiving, by the second device, the configuration information for keeping the service uninterrupted of the respective network slices that is synchronized by the data storage module of the first device comprises:
determining first network slices of the first device and second network slices of the second device; and
receiving, through the respective second network slices, first configuration information for keeping the service uninterrupted that is synchronized by the respective first network slices.

5. The method according to claim 1, wherein after receiving, by the second device, the version information and the configuration information of the respective network slices synchronized by the first device, the method further comprises:
in a process that the respective network slices of the second device are upgraded according to the version information and the configuration information, when it is detected that a part of network slices in the respective network slices fail to be upgraded, instructing the second slice control planes and the second slice forwarding planes corresponding to the part of network slices to perform a rollback operation, and instructing other network slices to continue to be upgraded.

6. The method according to claim 1, wherein after receiving, by the second device, the version information and the configuration information of the respective network slices synchronized by the first device, the method further comprises:
receiving, by the second device, first hot backup data and second hot backup data that are sent by the first device; and
performing, by the second device, the master/standby switching between the first slice control planes and the second slice control planes according to the first hot backup data, and the master/standby switching between the first slice forwarding planes and the second slice forwarding planes according to the second hot backup data.

7. The method according to claim 6, wherein the method further comprises:
when the master/standby switching between the first slice control planes and the second slice control planes is completed, sending full data to the second slice control plane, wherein the full data comprises configuration information and configuration data; and
when the master/standby switching between the first slice forwarding planes and the second slice forwarding planes is not completed, sending changed data in the configuration information to the second slice forwarding plane.

8. The method according to claim 6, wherein the method further comprises:
when the master/standby switching between the first slice forwarding planes and the second slice forwarding planes is completed, sending full data to the second slice forwarding plane, wherein the full data comprises configuration information and configuration data; and
when the master/standby switching between the first slice control planes and the second slice control planes is not completed, sending changed data in the configuration information to the second slice control plane.

9. An apparatus for in-service upgrading of network slices, comprising:
a receiving module, configured to receive version information and configuration information of respective network slices synchronized by a first device;
a switching module, configured to perform, when the synchronization of the version information and the configuration information is completed, master/standby switching between respective first slice control planes of the first device and respective second slice control planes of the second device, and master/standby switching between respective first slice forwarding planes of the first device and respective second slice forwarding planes of the second device; and
an upgrading module, configured to, when the master/standby switching between the first slice control planes and the second slice control planes and between the first slice forwarding planes and the second slice forwarding planes is completed, load configuration data and perform configuration according to the configuration data by the second device, so as to complete upgrading of the second device.

10. A computer-readable storage medium, wherein the computer-readable storage medium stores a computer program, and the computer program, when running on a processor, causes the processor to execute the method according to any one of claims 1 to 8.
